# EUROPÄISCHE PATENTSCHRIFT

(11) **EP 2 154 402 B1**
(45) Veröffentlichungstag und Bekanntmachung des Hinweises auf die Patenterteilung: **31.05.2017**
(21) Anmeldenummer: 09166466.4
(22) Anmeldetag: 27.07.2009
(51) Int. Cl.: F16L 9/17, F16L 11/15, F16L 11/16, F16L 11/24

(54) **Mehrlagiges Schlauchprodukt und Verfahren zu dessen Herstellung**
Multi-layer hose product and method for producing same
Produit de tuyau flexible multicouche et son procédé de fabrication

(30) Priorität: 11.08.2008 DE 102008037294
(43) Veröffentlichungstag der Anmeldung: 17.02.2010
(73) Patentinhaber: LeadX Aktiengesellschaft, 9491 Ruggell (LI)
(72) Erfinder: Skufca, Maks, Domzale 1230 (SI)
(74) Vertreter: Winter, Brandl, Fürniss, Hübner, Röss, Kaiser, Polte - Partnerschaft mbB

(56) Entgegenhaltungen:
- WO-A1-95/22712
- CH-A- 405 836
- GB-A- 2 103 754
- JP-A- 54 159 722
- US-A- 2 640 500
- US-A- 3 273 600
- US-A- 4 692 564
- US-A- 5 004 018
- US-A1- 2005 139 280
- US-E1- R E37 775

## Beschreibung

Die vorliegende Erfindung betrifft ein mehrlagiges Schlauchprodukt sowie ein Verfahren zu dessen Herstellung. Insbesondere betrifft die Erfindung ein mehrlagiges Schlauchprodukt zur Aufnahme und Verpackung von medizinisch verwendeten Stoffen, z.B. Fluiden.

Damit ein Schlauch oder eine Verpackung von Fluiden zur Verwendung im medizinischen Bereich zugelassen wird, muss insbesondere sichergestellt sein, dass das umschlossene medizinische Produkt nicht verunreinigt wird. Daher werden besonders neue Materialien, die mit dem Produkt in Berührung kommen könnten, aufwändigen und teuren Tests unterzogen, bevor diese verwendet werden dürfen.

Verschiedenste Verfahren und Materialkombinationen zur Herstellung derartiger Verpackungen sind bekannt.

Beispielsweise sind aus der CH 452 879 B und CH 468 914 B Verfahren zum Herstellen von gas- und flüssigkeitsdichten Tuben mit geschichteten Wandungen bekannt. Die CH 452 879 B beschreibt ein Verfahren, bei dem eine undurchlässige bandförmige Trägerfolie, beispielsweise eine Metallfolie (z.B. Aluminiumfolie) oder eine Fasermateriallage (z.B. Papierlage) ein- oder beidseitig mit einem verschweißbaren Kunststoff beschichtet und anschließend zu einem Rohr gewickelt wird. Dann werden die sich überlappenden Folienränder verschweißt, und der so geformte Behälter wird zur Abdeckung der Schweißnaht und Erzielung einer gleichmäßigen Wandstärke beispielsweise im Extrusionsverfahren mit einem Kunststoffmaterial ummantelt. Die CH 468 914 B zeigt und beschreibt einen geschichteten, rohrförmigen Behälter mit einer sich in Längsrichtung erstreckenden Seitennaht und einem an einem Ende angeformten Kopfstück. Der rohrförmige Behälter weist eine Mehrzahl von Schichten auf, die unter Zwischenschaltung von Bindemittelschichten aneinander gewalzt oder auf eine nicht näher beschriebene Weise miteinander verbunden sein sollen.

Die DE 34 19 255 A1 zeigt und beschreibt ebenfalls einen Tubenbehälter mit einer mehrschichtigen Wand. Diese Druckschrift stellt fest, dass die in den o.g. Patentschriften beschriebenen Verfahren zur Bildung von Querfalten am Längsfalz führen könne. Derartige Querfalten werden als qualitätsmindernd angesehen, weil eine Kunststoffschicht, welche eine Metallfolie schützt, im Bereich der Querfalten relativ dünn sei und dadurch die Beständigkeit gegen aggressive Füllgüter herabgesetzt würde. Um diesen Nachteil zu vermeiden, weist die Wand des Behälters nach der DE 34 19 255 A1 eine Schicht aus einem thermoplastischen Material und eine metallische Schicht auf einer Trägerfolie auf, die ebenfalls aus thermoplastischem Material hergestellt ist. Die Metallschicht soll einen vollständigen Lichtschutz bieten und das Herausdiffundieren von Bestandteilen des Füllguts sowie das Hineindiffundieren von Sauerstoff verhindern. Zur Herstellung wird zunächst eine bandförmige Mehrschichtfolie, zu der die Metallfolie gehört, zu einem Rohr geformt, wobei die Folienränder sich überlappen und zusammengeschweißt werden. Über die so geschweißte Folie wird eine Deckschicht extrudiert, die die Außenseite des Tubenbehälters bildet. Die Deckschicht kann einen eventuell transparenten Schutz für einen Aufdruck auf der (Kunststoff-)Außenseite der Mehrschichtfolie bilden und/oder gleichzeitig die verschweißte Seitennaht des Kunststoffschlauchs überdecken.

Die DE 20 2006 02 407 U1 zeigt und beschreibt einen schlauchförmigen Kunststoffverbund sowie ein Verfahren zu dessen Herstellung. Eine eine Außenschicht formende, von einer Endlosbahn abgerollte Kunststofffolie wird mit Hilfe eines Formwerkzeuges, welche mehrere über- und hintereinander angeordnete und drehbar gelagerte Kegelräder umfasst, zu einem Folienschlauch geformt, wobei die sich gegenüberliegenden Seitenkanten parallel zueinander überlappend oder auf Stoß oder in einem geringen Abstand zueinander gelegt werden. Gleichzeitig wird ein eine Innenschicht bildendes, aus einer Ringdüse einer Extrusionseinrichtung extrudiertes Rohr in das Formwerkzeug eingeführt, wobei die das extrudierte Rohr bildende Schmelze aus thermoplastischem Kunststoff noch (semi-)flüssig ist. In dem Formwerkzeug wird der zum Folienschlauch geformte Bereich der Kunststofffolie um das extrudierte Rohr herum angelegt, wobei sich aufgrund des flüssigen Zustands des extrudierten Rohrs dessen noch (semi-)flüssige Außenseite mit der Innenseite des angelegten Folienschlauchs verbindet. Dabei wird die Seitennaht de Folienschlauchs komplett verschmolzen. Der aus dem Folienschlauch und dem extrudierten Innenrohr bestehende Kunststoffverbund wird anschließend in eine Kalibriereinrichtung geführt, in der die noch niedrigviskose Schmelze des extrudierten Rohrs abgekühlt wird. Das Innenrohr besteht bevorzugt aus demselben Kunststoff wie die Innenseite des Folienschlauchs, um eine innige Verbindung (Verschmelzung) der beiden Schläuche zu erzielen.

Die DD 214 570 lehrt eine Vorrichtung zur kontinuierlichen Herstellung von außenbeschichteten Schläuchen. Die außen zu beschichtenden Schläuche werden über einen flexiblen Dorn als Spreiz- und Stützglied geleitet. Der Dorn wird beispielsweise mittels eines Innendrucks aufgeblasen und kann dadurch bei Schichtdickenschwankungen des Schlauchs, wie sie beispielsweise durch das Verschweißen oder Vernähen einer Folie zu einem Schlauch auftreten, flexibel reagieren. Die außen aufzutragenden Schichten werden anschließend kalibriert. Dabei ist es auch möglich, eine Struktur einzubringen. Außerdem kann in mehreren Durchgängen eine mehrlagige "Sandwich-Beschichtung" der Außenseite erzielt werden.

Die DE 44 14 359 C2 zeigt einen Beutel für medizinische Zwecke sowie Verfahren und Vorrichtung zu seiner Herstellung. Nach dieser Druckschrift wird ein Schlauch aus einem für medizinische Zwecke geeigneten Material extrudiert und anschließen in mehreren Schritten in einzelne Beutel unterteilt, die mit Auslässen versehen, gemeinsam über Verbindungskanäle zwischen den Beuteln befüllt und anschließend durch luftdichtes Zuschweißen verschlossen werden. Danach können die Beutel voneinander getrennt werden.

Die DE 27 22 928 C2, die als Grundlage für den Oberbegriff des geltenden Anspruchs 1 dient, offenbart ein Schlauchprodukt, insbesondere einen Brauseschlauch, mit Innen- und Außenschlauch. Zwischen Innen- und Außenschlauch ist ein Verstärkungsband angeordnet, das fest mit dem Innenschlauch verbunden ist. Nach der Lehre dieser Druckschrift kann ein Brauseschlauch mit besonders engen Biegeradien gebogen werden, ohne abzuknicken.

Die DE 690 06 191 T2 sowie die WO01/86184 zeigen einen Innenschlauch, einen Außenschlauch und mehrere dazwischen angeordnete Verstärkungen. Dabei wird eine Zugbewehrung mit einem Draht umwickelt, um eine weitere Stabilisierung des Aufbaus zu erreichen.

Die DE 2 261 126 zeigt einen extrudierten glatten Innenschlauch, der im Falle einer Biegung zum Schlauchinneren ausweichen kann, weil er mit dem Außenschlauch in keiner festen Verbindung steht. Stattdessen ist zwischen Innen- und Außenschlauch eine Wendel angeordnet, die genügend Abstand vom Innenschlauch aufweist, damit dieser beim Biegen eine Falte bilden kann.

Die DE 30 25 707 offenbart eine Verklebung eines Bands mit einem Innenschlauch. Auf diese Anordnung wird ein Außenschlauch aufgespritzt. Das Band dient zur Stabilisierung des Schlauchs, so dass er weniger empfindlich gegen radialen Außendruck ist und sich somit auch weniger leicht abplattet.

Die DE 30 17 326 A1 erörtert die Herstellung eines bewehrten Kunststoffschlauchs aus verschiedenen Elastomeren.

Die EP 0 039 744 A1 zeigt ähnlich der vorstehend genannten DE 27 22 928 C2 einen Brauseschlauch, der als flexibler doppelwandiger Druckschlauch hergestellt ist. Ein extrudierter Innenschlauch aus einem Elastomer wird von einem extrudierten Außenschlauch aus thermoplastischem Material umhüllt. Innen- und Außenschlauch werden mindestens teilweise voneinander beabstandet gehalten.

Die WO95/22712 A1 zeigt einen thermoplastischen Innenschlauch, der mit einer metallischen Verstärkung umhüllt ist, die wiederum mit einem thermoplastischen Außenschlauch (aus einem anderen Material als der Innenschlauch) umgeben ist. Die Verstärkung ist auf ihrer Innen- und Außenseite jeweils mit einem Klebstoff beschichtet, mit dem sie mit dem Innen- bzw. Außenschlauch verklebt werden kann. Weil die beiden Klebstoffe miteinander und mit der metallischen Verstärkung verkleben, kann gleichzeitig ein überlappendes Teil der Verstärkung verklebt werden.

Die US 3,273,600 A schlägt vor, einen U-förmigen Kunststoffkanal mit flexiblen Seitenteilen zu extrudieren und mit den Seitenteilen nach außen schraubenförmig aufzuwickeln. Dann soll ein zweiter U-förmiger Kanal jeweils zwei benachbarte Seitenteile miteinander verklammern. Auf Grund der Flexibilität der Verbindung bzw. der Seitenteil soll so ein flexibler Schlauch geschaffen werden.

Die US 200570139280 A1 ähnelt der vorstehend genannten DE 27 22 928 C2, nennt jedoch nicht explizit die Verwendung als Brauseschlauch, sondern erörtert Druckfestigkeit gegen von außen aufgebrachten Druck insbesondere durch Vergraben des Schlauchs im Erdreich. Auch hier wird der aus Kunststoff bestehende Innenschlauch mit einem metallischen Verstärkungsband umwunden und dieses durch einen ebenfalls spiralförmig gewundenen Außenschlauch abgedeckt.

Bei allen in den genannten Druckschriften beschriebenen Verfahren sind zur sicheren Verbindung zwischen Innen- und Außenschicht bzw. Innen- und Außenschlauch zusätzliche Maßnahmen erforderlich. Entweder muss der Außenschlauch aus einem Material bestehen, das sich mit dem Material des Innenschlauchs beim Extrudieren verbindet, oder es wird eine Bindeschicht zur sicheren Verbindung zwischen Innen- und Außenschlauch vorgesehen. Als weitere Möglichkeit wird genannt, dass sich der (beispielsweise aus Kunststoff bestehende) Außenschlauch beispielsweise nach dem Zusammenfügen abkühlt und dabei stärker als der (beispielsweise Metall enthaltende) Innenschlauch zusammenzieht, um auf den Innenschlauch aufzuschrumpfen und dadurch eine Verbindung zwischen Innen- und Außenschlauch zu bilden, die sich kaum oder gar nicht löst, so dass sich der Innenschlauch nicht gegenüber dem Außenschlauch verdreht.

Ausgehend von dem vorstehend beschriebenen Stand der Technik ist es die Aufgabe der Erfindung, ein verbessertes Produkt sowie ein Verfahren zu dessen Herstellung zu schaffen.

Diese Aufgabe wird durch ein Produkt mit den Merkmalen des Anspruchs 1 bzw. ein Verfahren gemäß dem Anspruch 15 gelöst. Vorteilhafte Weiterbildungen sind Gegenstand der Unteransprüche.

Die Erfindung schafft ein Schlauchprodukt, mit einem ein- oder mehrlagigen Innenschlauch und einem den ein- oder mehrlagigen Innenschlauch umhüllenden, ein- oder mehrlagigen Außenschlauch. Erfindungsgemäß weist der Innenschlauch an seiner Außenmantelfläche ein oder mehrere Verankerungsmittel auf, die im Außenschlauch formschlüssig verankert sind. Die Materialien (oder Materialverbünde), aus denen der Innenschlauch und Außenschlauch gebildet sind, sind vorzugsweise Materialien, die bereits zur Verwendung mit dem in das Schlauchprodukt aufzunehmenden medizinischen Stoff zugelassen sind, die also beispielsweise bereits als Verpackung von Fluiden zur Verwendung im medizinischen Bereich zugelassen sind. Im Unterschied zum Stand der Technik wird bei dem erfindungsgemäßen Verfahren gerade darauf geachtet, dass der Innenschlauch keine vollständig glatte Außenmantelfläche besitzt, sondern über die Außenmantelfläche ragende Verankerungsmittel aufweist, die fest mit dem Innenschlauch verbunden sind.

Die Verankerungsmittel können grundsätzlich beliebig ausgebildet sein, sofern sie eine formschlüssige Verankerung des Innenschlauchs im Außenschlauch ermöglichen.

In einer bevorzugten Ausführungsform umfassen die Verankerungsmittel eine oder mehrere von der Außenmantelfläche des Innenschlauchs vorspringende Falzungen. Die Falzungen können in Längsrichtung, in Umfangsrichtung oder wendelförmig um die Außenmantelfläche des Innenschlauchs verlaufen. Die Verankerungsmittel umfassen beispielsweise in Form von Bördelnähten verschweißte oder verklebte Falzungen. Im Gegensatz zum Stand der Technik tragen die durch das Verschweißen oder Verkleben der Falzungen erhaltenen Schweißnähte nach außen auf. Durch die von der Außenmantelfläche überstehenden Schweißnähte des Innenschlauchs wird beim anschließenden Extrudieren des Außenschlauchs eine formschlüssige Verankerung des Innenschlauchs im Außenschlauch und dadurch eine feste Verbindung zwischen Innen- und Außenschlauch erzielt.

Im Besonderen dann, wenn der Innenschlauch aus einem zu einer Schlauchform geformten Folienmaterial hergestellt ist, lassen sich die einander gegenüber liegenden Folienränder nach außen falzen und in der Form einer Bördelnaht miteinander verschweißen. Anstelle der Bördelnaht wäre auch eine Stoßkehlnaht geeignet, um an der Außenmantelfläche des Innenschlauchs Verankerungsmittel auszubilden. Darüber hinaus können auch zusätzliche Hilfsstreifen vorgesehen sein, die beispielsweise einen Klebstoff oder eine Legierung zur Verbindung mit den Folienlagen enthalten. Solche Hilfsstreifen können ebenfalls nach außen ragende Verankerungsmittel enthalten, wobei in diesem Fall derartige Hilfsstreifen an einer Innenmantelfläche des Innenschlauchs so befestigt werden, dass die an den Hilfsstreifen vorgesehenen Verankerungsmittel beispielsweise durch die Naht des Innenschlauchs über die Außenmantelfläche des Innenschlauchs nach außen ragen. Es kann bei einer solchen Konstruktion ausreichen, dass der Innenschlauch durch den Hilfsstreifen an der Naht abgedichtet ist, so dass keine Verschweißung der Naht notwendig wird. Alternativ können derartige Hilfsstreifen auf freien Stellen der der Außenmantelfläche des Innenschlauchs so eingeführt werden, dass sie sich einerseits mit der Außenmantelfläche des Innenschlauchs fest verbinden und andererseits als Verankerungsmittel gegenüber der Außenmantelfläche des Innenschlauchs hervorstehen. Auf diese Weise ist es möglich, die Verankerung unabhängig von Falzungen und Schweißnähten des Innenschlauchs zu gestalten. Derartige Hilfsstreifen können beispielsweise T-förmig sein, wobei die Spitze des "T" als Verankerungsmittel nach außen zeigt. Als weitere Beispiele sind auch "Y"-förmig nach außen zeigende Hilfsstreifen oder Hilfsstreifen in Doppel-T-Form sowie andere Formen vorstellbar. Die Hilfsstreifen können darüber hinaus auch mit Lücken abwechselnde nach außen zeigende Verankerungsmittel aufweisen, was zu einer borstenartigen Ausgestaltung führen kann, wie später noch anhand eines Ausführungsbeispiels genauer erörtert wird. Entscheidend ist jeweils nur die feste Verbindung der Hilfsstreifen mit dem Innenschlauch und das Hervorstehen der Hilfsstreifen gegenüber der Außenmantelfläche des Innenschlauchs.

In jedem Fall können die von der Außenmantelfläche des Innenschlauchs vorspringenden Schweißnähte, Falzungen oder ähnliche Verankerungsmittel darüber hinaus perforiert sein. Durch die Perforation kann beim anschließenden Extrudieren das den Außenschlauch bildende Kunststoffmaterial fließen, wodurch sich eine weiter verbesserte Verankerung ergibt. Statt einer Perforation, also vollständig von den Verankerungsmitteln umschlossenen Löchern, oder zusätzlich zu diesen ist es auch denkbar, den Verankerungsmitteln beispielsweise durch Stanzen eine spezielle Außenkontur, beispielsweise in der Art von Rechteckzähnen, Sägezähnen oder sinusartigen (Halb-) Wellen zu verleihen.

Alternativ oder zusätzlich zu den nach außen auftragenden Schweißnähten können die Verankerungsmittel aus Borsten, Fransen oder dergleichen gebildet sein, die an der Außenmantelfläche des Innenschlauchs angeformt sind oder durch oder Aufrauen der Außenmantelfläche des Innenschlauchs geschaffen wurden. In jedem Fall bewirken die Borsten oder dergleichen eine formschlüssige Verankerung des Innenschlauchs am Außenschlauch. Selbst nach einer altersbedingten Materialermüdung wird dadurch ein unerwünschtes oder vorzeitiges Lösen des Innenschlauchs vom Außenschlauch verhindert.

Neben den Verankerungsmitteln in Längsrichtung, wie den vorstehend beschriebenen Längsnähten, die insbesondere eine Verdrehung des Innenschlauchs gegenüber dem Außenschlauch verhindern, können je nach Anwendungsfall natürlich auch andere Anordnungen der Schweißnähte oder sonstige Verankerungsmittel vorgesehen sein. Beispielsweise können ringförmig angeordnete Verankerungsmittel vorgesehen sein, um ein Verrutschen des Innenschlauchs gegenüber dem Außenschlauch in Längsrichtung zu verhindern. Weiter können wendel- oder kreuzwendelförmig angeordnete Verankerungsmittel vorgesehen sein, um sowohl Verdrehungen als auch unterschiedlichen Zugbelastungen entgegenwirken. Bei geringeren zu erwartenden Belastungen oder als zusätzliche Maßnahme können neben oder an Stelle von kontinuierlichen auch punktförmige Verankerungsmittel vorgesehen sein.

Die Verankerungsmittel können weiterhin waben- oder netzartige Vorsprünge an der Außenmantelfläche des Innenschlauchs, an der Außenmantelfläche des Innenschlauchs befestigte und nach außen zeigende Noppen oder Fäden umfassen. Letztere können zusätzlich mit magnetisierbaren Enden versehen sein, so dass sie sich in einem Magnetfeld während der Extrusion aufrichten lassen.

Selbstverständlich können sämtliche der oben genannten Verankerungsmittel einzeln, d.h. jeweils für sich, oder auch beliebig kombiniert vorgesehen sein.

Besonders bevorzugt werden die von der Außenmantelfläche des Innenschlauchs vorspringenden Falzungen durch Raffen des Innenschlauchs gebildet. Das Raffen ist ein einfach durchzuführendes Verfahren, bei dem ein kleiner Abschnitt des Innenschlauchs beispielsweise zwischen zwei gegenläufigen Reibrollen mit geringem Abstand zwischen ihnen gegriffen und zwischen diese Rollen gezogen wird, um eine Falzung zu bilden. Anschließend kann die so entstandene Falzung dauerhaft verbunden werden, indem beispielsweise die Rollen aufgeheizt werden, so dass sich entweder das Material des Innenschlauchs an der Falzung verschweißt oder ein vorab auf der Innenseite des Innenschlauchs aufgetragener Klebstoff aktiviert wird und die Falzung verklebt. Im Prinzip sind auch andere dauerhafte Verbindungen möglich, beispielhaft sei ein Heften oder Tackern der Falzung genannt.

Der Innenschlauch kann je nach den im Einsatz auf das mehrlagige Schlauchprodukt wirkenden Kräften geraffte Falzungen aufweisen, die gerade in Längsrichtung des Schlauchprodukts bzw. des Innenschlauchs verlaufen, quer zu dieser Längsrichtung verlaufen oder in beliebigen, auch wechselnden Winkeln zur Längsrichtung des Schlauchprodukts angeordnet sind. Abhängig vom Verlauf der Falzungen als den Verankerungsmitteln können Kräfte, die zwischen dem Innen- und Außenschlauch in bestimmten Richtungen wirken, besser oder schlechter zwischen Innenschlauch und Außenschlauch verteilt werden. Ist beispielsweise mit einer Torsionsbelastung zwischen Innen- und Außenschlauch zu rechnen, wäre es zweckmäßig, ein Verankerungsmittel, beispielsweise eine Falzung oder eine Verbindungsschweißnaht, in der Längsrichtung des Schlauchprodukts vorzusehen. Ist dagegen vorwiegend eine unterschiedliche Zugbelastung von Innen- und Außenschlauch zu erwarten, dürften quer zur Schlauchrichtung verlaufende Falzungen des Innenschlauchs die entsprechenden Kräfte zwischen Innen- und Außenschlauch verteilen. Falls - wie in den meisten Fällen - die zu erwartende Belastung den Schlauch sowohl tordieren als auch unter Zug setzen könnte, bietet sich beispielsweise an, eine Falzung wendelförmig oder abschnittsweise wendelförmig um den Innenschlauch umlaufen zu lassen. Selbstverständlich ist zur noch sichereren Verbindung auch vorstellbar, zwei gegenläufige Wendeln auf der Außenmantelfläche des Innenschlauchs zu falzen, oder eine oder mehrere Wendeln mit den vorstehend beschriebenen längs oder quer verlaufenden Falzen oder anderen vorstehend erörterten Verankerungsmitteln zu kombinieren.

Die Falzungen können mit den bereits erwähnten Löchern, Borsten, Fransen oder der besonders ausgeformten Außenkontur versehen sein. Dadurch wird die Verankerung wie vorstehend bereits erörtert weiter verbessert.

Weiter bevorzugt kann der Innenschlauch aus mehreren zu einer Schlauchform verbundenen Einzelteilen zusammengesetzt sein. Wird der Innenschlauch aus mehreren Einzelteilen zusammengesetzt, bietet es sich an, die Verbindungsstellen dieser Einzelteile als Verankerungsmittel auszuformen. Werden beispielsweise die Einzelteile miteinander verschweißt, so können erfindungsgemäß im Gegensatz zum Stand der Technik, der eine möglichst gering auftragende Naht wie eine Stumpfstoßnaht empfiehlt, die Ränder zweier aneinanderstoßender Einzelteile jeweils nach außen gefalzt und miteinander zu einer Naht verbunden, also bevorzugt verschweißt oder verklebt werden.

Je nach Anwendung und vorliegenden Einzelteilen kann die vorstehend genannten Naht beispielsweise in der Längsrichtung des mehrlagigen Schlauchprodukts verlaufen. Mehrere derartige Nähte entstehen beispielsweise zwangsläufig und in der Regel parallel zueinander, wenn ein Innenschlauch mit vergleichsweise großem Durchmesser aus mehreren parallel zueinander zugeführten Einzelteilen, beispielsweise Folien, so geformt wird, dass der Innenschlauch aus mehreren in Umfangsrichtung aneinander gereihten Längslagen gebildet ist. Die Nähte zwischen den Längslagen, die wie im letzten Absatz beschrieben nach außen gefalzt und verschweißt werden, können dann als Verankerungsmittel dienen.

Auch quer zu der Längsrichtung des Schlauchs verlaufende Nähte sind möglich, wenn beispielsweise einzelne Ringlagen oder Teilschläuche zusammengefügt werden. Entsprechende Nähte wirken analog wie die oben beschriebenen Raffungen quer zu der Längsrichtung des Schlauchs als Verankerungsmittel zur Übertragung von in der Längsrichtung des Schlauchs wirkenden Kräften vom Innen- auf den Außenschlauch und umgekehrt. Selbstverständlich können auch in diesem Fall die verschiedenen Verankerungsmittel kombiniert werden; beispielsweise kann eine Ringlage aus mehreren in Umfangsrichtung aneinander gereihten Längslagen bestehen, zwischen denen Verankerungsmittel ausgebildet sein können.

Bisher wurden als Verankerungsmittel im Wesentlichen makroskopische Falzungen, Vorsprünge wie Borsten oder Fransen und/oder Verbindungsnähte gezeigt. Es ist jedoch ebenso möglich, die Außenmantelfläche des Innenschlauchs vor dem Extrudieren des Außenschlauchs aufzurauen. Dieses Aufrauen erzeugt mikroskopische Verankerungsmittel auf der Außenmantelfläche des Innenschlauchs, die sich wie die vorstehend erörterten makroskopischen Verankerungsmittel beim Aufextrudieren formschlüssig mit dem Außenschlauch verbinden.

Besonders bevorzugt besteht der Innenschlauch aus einem für Medizinalschläuche zugelassenen Polymer. Obwohl auch ein solcher Schlauch wie jedes in der Medizintechnik zugelassene Produkt eine Reihe von Prüfungen für die Zulassung bestehen muss, sind zumindest die Chancen zum Bestehen dieser Prüfungen in diesem Fall sehr hoch, weil der eigentlich mit dem medizinischen Produkt in Berührung kommende Teil, nämlich der Innenschlauch aus dem zugelassenen Polymer, bereits getestet wurde und es nicht zu erwarten ist, dass er sich im neuen Test schlechter als bisher verhalten wird. Dagegen kann das gesamten Schlauchprodukt im Vergleich dazu geringere Kosten, eine verbesserte Haltbarkeit und mechanische Belastbarkeit aufweisen, weil das aufextrudierte Außenmaterial die entsprechenden Eigenschaften des für Medizinalschläuche zugelassenen Polymers übertreffen kann und folglich auch die Kombination beider Materialien diese Vorteile aufweist.

Wie aus dem vorstehenden Absatz erkennbar wird, bestehen Innen- und Außenschlauch bevorzugt aus unterschiedlichen Materialien. Beispielsweise besteht der Innenschlauch aus einem Material, das einfach in Folienform herzustellen ist, während der Außenschlauch aus einem aufzuextrudierenden Polymer besteht. Dadurch können sich die entsprechenden Materialeigenschaften wirkungsvoll ergänzen.

Besonders bevorzugt kann das erfindungsgemäße Schlauchprodukt aus einem Innen- und einem Außenschlauch aus Materialien hergestellt sein, die sich nicht ohne weiteres miteinander verbinden lassen. Beispielsweise können der Innenschlauch und der Außenschlauch aus einem Fluoro-(co-)polymer wie Teflon, einem Silikon- oder PVC-Material gefertigt sein. Derartige Materialien lassen sich nur schwer oder gar nicht miteinander und/oder mit anderen Materialien verkleben oder verschweißen. Die hier erörterten mechanischen Verankerungsmittel schaffen dennoch eine sichere und belastbare Verbindung zwischen dem Innen- und Außenschlauch.

In einem besonders bevorzugten Verfahren zur Ausbildung der Verankerungsmittel werden die eine oder mehreren Folienlagen auf einem rotationssymmetrischen Stützkörper herum angeordnet. Der Innenschlauch kann dann wie vorstehend beschreiben besonders einfach gerafft werden, ohne dass die Gefahr besteht, dass der am Ende des Raffens vorhandene Durchmesser des Innenschlauchs kleiner als der Durchmesser des Dorns wird. Derselbe oder ein weiterer Stützkörper kann den Schlauch während des Extrudierens aufgespreizt halten. Selbstverständlich kann für die beiden Schritte des Raffens und des Aufextrudierens ähnlich wie in der oben erwähnten DD 214 570 B auch ein flexibler Dorn verwendet werden.

Anstelle des vorstehend erwähnten flexiblen Doms, der nach der DD 214 570 B beispielsweise mit Gas gefüllt sein kann, kann auch direkt ein Überdruck im Innenschlauch das Aufspreizen während des Aufextrudierens bewirken. Alternativ kann auch ein Unterdruck auf der Außenseite zum gleichen Erfolg führen; entscheidend ist, dass ein Druckgefälle von der Innen- zur Außenseite vorliegt.

Zweckmäßigerweise kann das mehrlagige Schlauchprodukt nach dem Aufextrudieren des Außenschlauchs in festgelegten Stücklängen abgelängt werden. Das mehrlagige Schlauchprodukt wird in der Regel nicht als endloser oder quasi-endloser Schlauch verwendet, sondern beispielsweise in Behälter unterteilt weiterverarbeitet. Falls das Schlauchprodukt in einzelne voneinander abgetrennte Stücke unterteilt wird, die zu Behältern weiterverarbeitet werden, kann es besonders vorteilhaft sein, an einem Ende eines solchen Behälters einen Anschluss, beispielsweise eine Einfüll- oder Ausgießöffnung vorzusehen. Alternativ ist es jedoch auch möglich, das mehrlagige Schlauchprodukt lediglich zu befüllen und anschließend zu verschweißen, wobei auf einen entsprechenden Anschluss verzichtet wird.

Obwohl die Fertigung des mehrlagigen Schlauchprodukts mit den Schritten des Erzeugens der Folie, des Ausbildens des Innenschlauchs aus der Folie, des Anbringens von Verankerungsmitteln und des Aufextrudierens des Außenschlauchs sowie der Nachbearbeitung durch Ablängen usw. kontinuierlich ablaufen kann, ist es auch möglich, die Schritte einzeln durchzuführen und die Zwischenprodukte beispielsweise auf Rollen zu lagern. Im letzteren Fall ist es zweckmäßig, beispielsweise die Innenfolie vor der Erzeugung des Innenschlauchs auf eine Rolle oder einen Spulenkörper aufzuwickeln. Besonders vorteilhaft wird die Innenfolie mindestens einseitig gereinigt oder anderweitig präpariert und beim oder kurz vor dem Aufwickeln mindestens einmal so gefaltet, dass jeweils gleiche Seiten, entweder präparierte Seiten oder unpräparierte Seiten, aufeinanderliegen. Dadurch können die präparierten Seiten nicht durch Kontakt mit den nicht präparierten Seiten erneut verschmutzt werden.

Nachstehend werden bevorzugte Ausführungsformen unter Bezugnahme auf die Figuren näher beschrieben.
Fig. 1 zeigt eine isometrische Darstellung eines erfindungsgemäßen mehrlagigen Schlauchprodukts.
Fig. 2 zeigt eine Bördelnaht eines Innenschlauchs des mehrlagigen Schlauchprodukts mit abschnittsweise unterschiedlichen Verankerungsmitteln.
Fig. 3 zeigt eine Vorderansicht eines Innenschlauchs 1, der aus zwei Folien hergestellt ist, die durch einfache Überlappnähte miteinander verbunden sind.
Fig. 4 zeigt ein erfindungsgemäßes zweilagiges Schlauchprodukt mit einem Innenschlauch aus drei Folien, die durch aufgebördelte Überlappnähte miteinander verbunden sind.
Fig. 5 zeigt ein nicht zur Erfindung gehörendes Beispiel mit einem mehrlagigen Innenschlauch in der Vorderansicht.
Fig. 6 zeigt ein Beispiel für eine Vorrichtung und ein Verfahren zur Erzeugung eines erfindungsgemäßen Schlauchprodukts.
Fig. 7 a und 7b zeigen den Vorgang des Falzens am Beispiel eines in Längsrichtung des Innenschlauchs verlaufenden Falzes.
Fig. 8 zeigt in Seitenansicht ein Beispiel eines Innenschlauchs aus zwei durch eine Bördelnaht in der Mitte verbundenen einzelnen Stücken, bei dem durch Andruckrollen, deren Achsen senkrecht zur Längsrichtung des Schlauchs verlaufen, sowohl die Bördelnaht als auch zwei Falze gebildet wurden.
Fig. 9 zeigt den Vorgang des Falzens am Beispiel eines in Umfangsrichtung des Innenschlauchs verlaufenden Falzes.
Fig. 10 veranschaulicht ein weiteres nicht zur Erfindung gehörendes Beispiel, bei dem ein Schlauch in zwei unterschiedliche Richtungen gefalzt ist und dadurch in zwei ineinander liegenden Schläuchen verankert wird.

Nachfolgend werden einige bevorzugte Ausführungsformen erläutert.

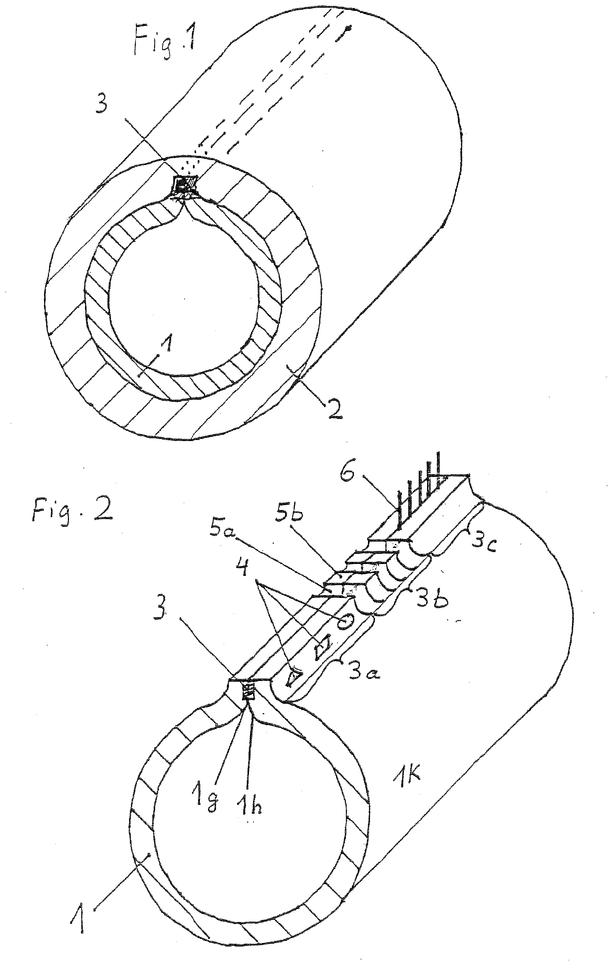

Fig. 1 zeigt eine isometrische Darstellung eines erfindungsgemäßen mehrlagigen Schlauchprodukts 20 mit einem Innenschlauch 1 und einem Außenschlauch 2. Der Innenschlauch 1 ist in Fig. 1 aus einer Kunststofffolie gebildet, die mit Hilfe entsprechender Formwerkzeuge zu einem Schlauch geformt wurde. Ein Verfahren zur Formung eines Schlauchs aus einer Kunststofffolie ist beispielsweise in der vorstehend erörterten DE 20 2006 02 407 U1 angegeben. Wie in der DE 20 2006 02 407 U1 beschrieben können die Formwerkzeuge aus mehreren paarweise angeordneten konturierten Walzen gebildet sein, die die beispielsweise von einer Endlosbahnrolle abgezogene Kunststofffolie zu einer Schlauchform formen. Die beiden aneinanderstoßenden Folienränder 1g, 1h des Innenschlauchs verlaufen in Längsrichtung des Schlauchprodukts und sind nach außen gefalzt und miteinander verschweißt. Durch das Falzen und Verschweißen ergibt sich eine nach außen vorspringende Bördelnaht 3, die hier als Beispiel einer Naht gezeigt ist, an der Außenmantelfläche 1 k des Innenschlauchs 1. Der Außenschlauch 2 wird, wie aus Fig.1 ersichtlich und wie später noch genauer erläutert, in herkömmlicher Weise mit Hilfe einer Extrusionsvorrichtung auf den Innenschlauch 1 aufextrudiert, dass der Innenschlauch 1 inklusive der Naht 3 vom Außenschlauch 2 vollständig ummantelt ist.

Die vom Material des Außenschlauchs 2 formschlüssig eingeschlossene Naht 3 wirkt als ein Verankerungsmittel, das den Innenschlauch 1 im Material des Außenschlauchs 2 fest verankert. Diese in Fig. 1 gezeigte Naht 3 verankert den Innenschlauch 1 insbesondere so, dass er mechanisch gegen ein Lösen durch Verdrehung gegenüber dem Außenschlauch 2 geschützt ist.

Fig. 2 zeigt den Innenschlauch 1 in isometrischer Darstellung im Detail. Der Innennschlauch 1 ist gebildet aus einer einzelnen zu einem Schlauch gerollten Folie. Die einander gegenüberliegenden Folienränder 1g, 1 h verlaufen in Längsrichtung des Innenschlauchs 1 und sind durch Schweißen oder Kleben dicht miteinander verbunden.

In Fig. 2 sind unterschiedlich modifizierte Verankerungsmittel BZ der Übersichtlichkeit halber nebeneinander veranschaulicht. Es sei aber darauf hingewiesen, dass diese unterschiedlichen Modifikationen Beispiele für die Gestaltung der Naht 3 am Innenschlauch 1 sind, die jeweils für sich, d.h. voneinander unabhängig, oder auch in beliebiger Kombination gemeinsam angewendet werden können. Im vorderen Abschnitt ist als Verankerungsmittel eine mit einer Perforation versehene Naht 3a gezeigt. Die entlang der Naht 3a ausgebildeten Löcher 4, welche die Perforation bilden, können in unterschiedlichen Formen, hier beispielsweise kreisförmig, rechteckig oder dreieckig ausgebildet sein. Bei der Ummantelung des Innenschlauchs 1 fließt das den Außenschlauch 2 bildende extrudierte Kunststoffmaterial durch diese Löcher 4 und verbindet sich somit mit der von der Außenmantelfläche 1 k des Innenschlauchs 1 vorstehenden Naht 3a. Im mittleren Abschnitt ist als Verankerung eine Naht 3b gezeigt, die in Querrichtung des Innenschlauchs 1 in regelmäßigen Abständen eingeschnitten ist. Die maximale Tiefe der Einschnitte 5a wird zweckmäßigerweise auf die Höhe der von der Außenmantelfläche 1 k des Innenschlauchs 1 vorstehenden Naht begrenzt, um sicherzustellen, dass ein intakter, dichter Innenschlauch 1 erhalten bleibt. Die Einschnitte 5a bilden eine Vielzahl von Fransen 5b an der Außenmantelfläche des Innenschlauchs 1, die in dem den Außenschlauch 2 bildenden Kunststoffmaterial formschlüssig eingeschlossen sind. Im letzten Abschnitt ist als Verankerungsmittel eine Naht 3c gezeigt, bei der vor dem Verschweißen der Folienränder 1 g, 1 h Borsten 6 eingebracht wurden, die anschließend aus der Naht 3c vorstehen. Wie die durch Einschnitte 5a gebildeten Fransen 6 werden auch die Borsten 6 beim Extrudieren vom extrudiertem Kunststoffmaterial, das den Außenschlauch 2 bildet, umhüllt. Selbstverständlich können auch die Schnitte zum Erzeugen der Fransen 5b oder die Borsten 6 spezielle geometrische Formen analog wie für die Löcher 4 gezeigt annehmen, falls diese der Belastung der Verbindung von Innen- und Außenschlauch 1, 2 besser angepasst sind. In anderen Worten können die Fransen 5b beispielsweise mit einer hier nicht gezeigten wellen-, zinnen- oder sägezahnförmigen Außenkontur versehen sein. Ferner sei darauf hingewiesen, dass Fig. 2 nicht maßstäblich ist; beispielsweise können die Borsten 6 deutlich weniger herausragen und/oder relativ zum Innenschlauch 1 dicker sein als in der Fig. 2 gezeigt, um im Extrusionsvorgang nicht oder nur geringfügig umzuknicken.

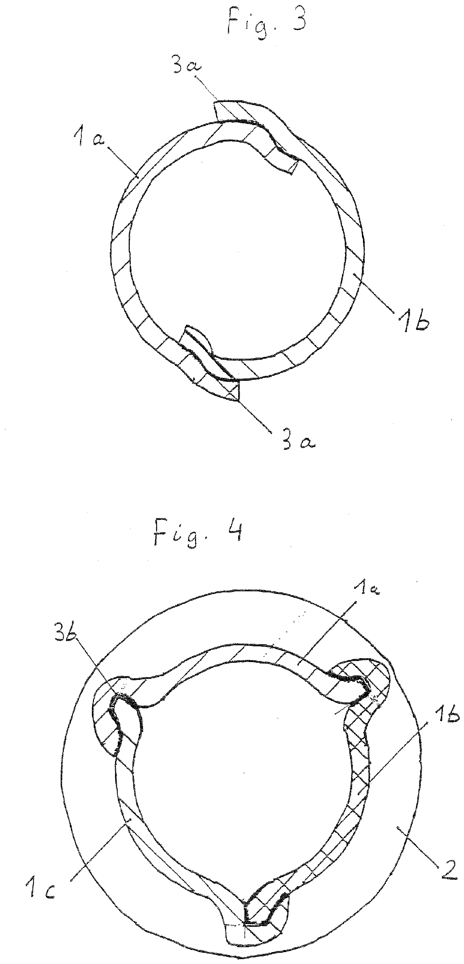

Die Fig. 3 und 4 zeigen jeweils eine Vorderansicht eines Innenschlauchs 1, der aus mehr als einer Folie (Fig. 3: 2 Folien 1a, 1b; Fig. 4: drei Folien 1a, 1b, 1c) hergestellt ist. Darüber hinaus sind in Fig. 3 statt der in den Fig. 1 und 2 gezeigten Bördelnaht 3 als alternative Ausführungsform zwei Überlappnähte 3a und in Fig. 4 überlappende Bördelnähte 3b gezeigt.

Fig. 4 skizziert eine aufgebogene Überlappnaht des Innenschlauchs 1. Zur Verdeutlichung der Verankerung wurde in Fig. 4 darüber hinaus auch das um den Innenschlauch 1 extrudierte Kunststoffmaterial skizziert, das den Außenschlauch 2 bildet und den aus Einzelfolien gebildeten Innenschlauch 1 umschließt. Es ist gut zu erkennen, dass das den Außenschlauch 2 bildende, auf den Innenschlauch 1 extrudierte Kunststoffmaterial die Nähte vollständig umschließt, so dass diese nach außen nicht sichtbar sind. Dadurch werden sowohl die optische Qualität als auch die Sicherheit der Verankerung des Verbindungsmittels im extrudierten Schlauch erhöht.

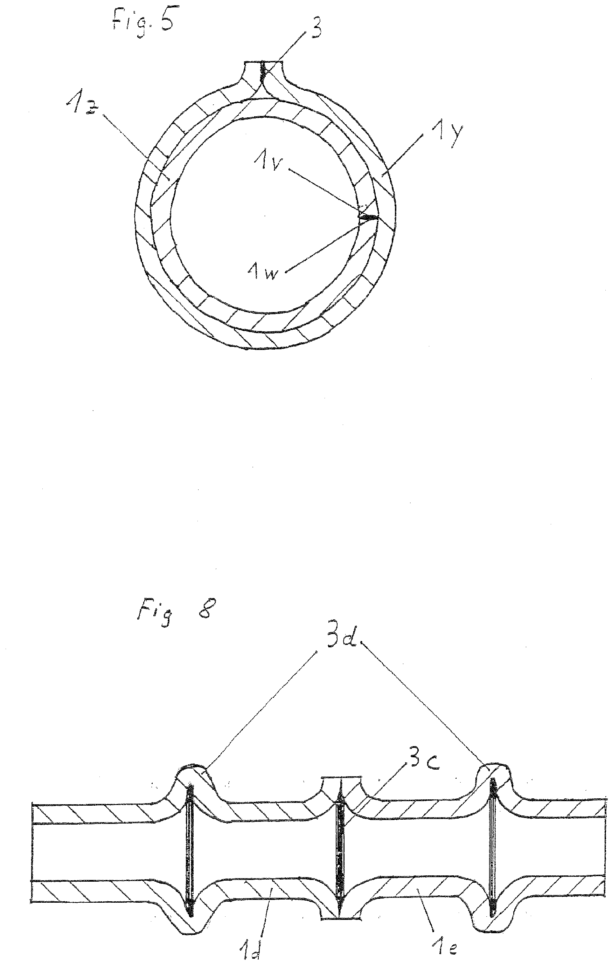

Fig. 5 zeigt einen mehrlagigen Innenschlauch 1 für ein nicht zur Erfindung gehörendes Schlauchprodukt in einer Vorderansicht. Eine innere Lage 1z des Innenschlauchs 1 kann dabei beispielsweise mit einer äußeren Lage 1y des Innenschlauchs 1 verklebt oder auf andere im Stand der Technik beschriebene Weise verbunden sein. Die innere Lage 1z ist hier gebildet aus einer Folie, wobei die gegenüberliegenden Folienränder 1v, 1w durch eine Stumpfstoßverschweißung (in Fig. 5 auf der rechten Seite) miteinander verbunden sind. Die hier ebenfalls aus einer Folie gebildete äußere Lage 1y weist wiederum eine von der Außenmantelfläche 1k des Innenschlauchs 1 vorstehende Bördelnaht 3 als ein Verankerungsmittel für den in Fig. 5 nicht gezeigten Außenschlauch 2 auf.

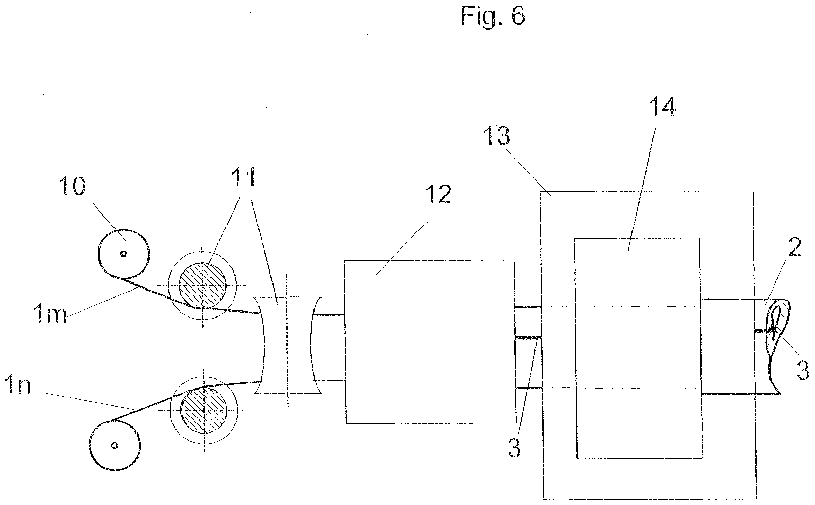

Fig. 6 zeigt ein Beispiel für eine Vorrichtung und ein Verfahren zur Erzeugung eines erfindungsgemäßen Schlauchprodukts. Es wird hierbei zunächst von einem zweistufigen Verfahren ausgegangen. In einer (nicht gezeigten) ersten Stufe werden einzelne Folien 1 m, 1 n für den Innenschlauch 1 vorbearbeitet, beispielsweise können sie gereinigt und/oder aufgeraut werden, Verankerungsmittel können aufgeprägt werden und ähnliche Vorgänge können durchgeführt werden. Diese Folien 1 m, 1 n werden dann auf Spulen 10 aufgewickelt und entweder zwischengelagert oder direkt zur nachfolgend beschriebenen zweiten Stufe transportiert. Obwohl dies nicht gezeigt ist, werden die Folien bevorzugt so auf die Spulen 10 gewickelt, dass unbearbeitete Seiten zweier Folien aufeinander liegen und umgekehrt die bearbeiteten Seiten aufeinanderliegen. Bei einer einzelnen auf eine Spule gewickelten Folie wird das beispielsweise erreicht, indem sie in der Mitte gefaltet wird. Der Vorteil dieser Wicklungsart ist es, dass die jeweils gleichen bearbeiteten Seiten (Folienaußenseite auf Folienaußenseite, Innenseite auf Innenseite) aufeinander gelegt werden und somit nicht durch Kontakt mit den nicht oder anders bearbeiteten Folienseiten beeinflusst (z.B. verschmutzt) werden können. In der in Fig. 6 veranschaulichten zweiten Stufe wird eine vorbearbeitete erste Folie 1 von (im Beispiel zwei) Spulen 10 abgerollt und über Formwerkzeuge 11 in an sich bekannter Weise (vgl. z.B. die DE 20 2006 002 407 U1) zu einem Folienschlauch geformt. In Fig. 6 ist ein Abrollen zweier Folien *1m, 1n* von jeweils einer Rolle gezeigt. Dies könnte entweder zu einem doppellagigen Innenschlauch mit den Lagen 1y, 1z wie in Fig. 5 gezeigt, oder zu einem einlagigen Innenschlauch 1aus zwei Längslagen 1a, 1b, wie in Fig. 3 gezeigt, führen. In der nachstehenden Beschreibung wird vom letzteren Fall ausgegangen.

Hier sind die Formwerkzeuge 11 als (teilweise geschnittene) Kegelräder dargestellt.

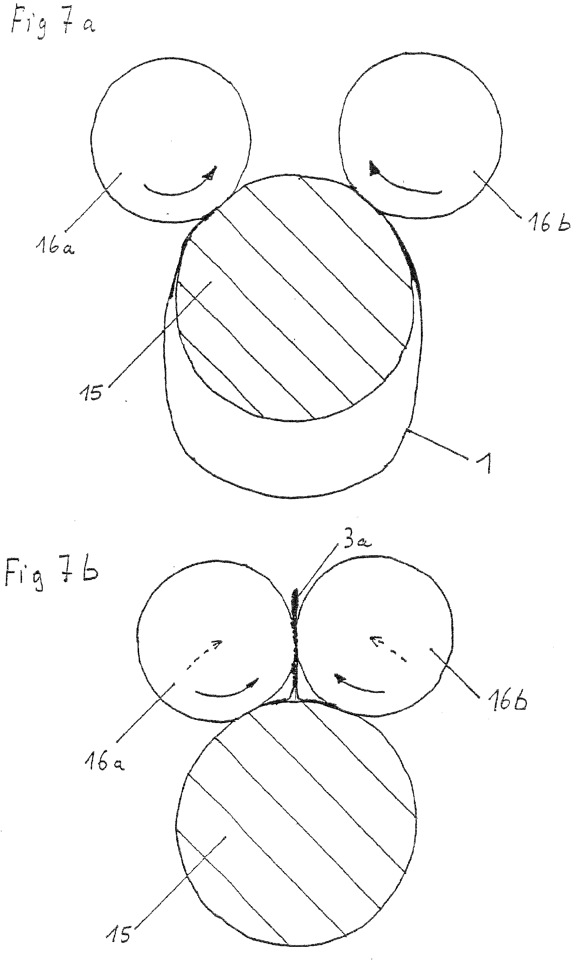

Die sich gegenüberliegenden Seitenränder der Folien 1 m, 1 n werden in einer Vorrichtung 12 gefasst und in Längsrichtung nach außen gefalzt und miteinander verschweißt. Eine dabei gebildete Schweißnaht 3 ist skizziert. Die Vorrichtung 12 kann darüber hinaus auch so konzipiert sein, dass sie die Folien 1m, 1 n an mehreren Stellen in Längs- und/oder Umfangsrichtung falzt und die Falzungen verklebt oder verschweißt. Dies wird mit Bezug auf die Fign. 7 und 8 noch genauer erläutert. Bei den beispielhaften zwei verarbeiteten Folienstreifen entstehen natürlich mindestens zwei Schweißnähte, wie in Fig. 3 verdeutlicht, obwohl in der Fig. 6 zur Vereinfachung nur eine Naht 3 gezeigt wird.

Wie es in Fig. 7a veranschaulicht ist, kann das Falzen des Innenschlauchs 1 bzw. der den Innenschlauch 1 bildenden Folie so geschehen, dass die den Innenschlauch 1 bildende Folie (aus Gründen der Vereinfachung hier ohne Schweißnaht skizziert) lose auf einem Dorn 15 aufliegt und dann durch Andruckrollen 16a, 16b gerafft und gefalzt wird. Dazu drehen sich die Andruckrollen wie in Fig. 7a skizziert gegenläufig, um die den Innenschlauch 1 bildende Folie zu raffen. Anschließend werden die Andruckrollen 16a, 16b zusammengefahren, um eine Falzung 3d zu bilden, wie es in Fig. 7b durch gestrichelte Pfeile angedeutet ist. Schließlich wird diese Falzung 3d verschweißt. Dies geschieht, wie im Stand der Technik üblich, beispielsweise durch in einer Vorrichtung zur Erzeugung des mehrlagigen Schlauchprodukts nach den Andruckrollen 16a, 16b angeordnete Heizplatten, die die Falzung 3d fassen und zusammendrücken oder durch Aufheizen der Andruckrollen 16a, 16b selbst. Die (nicht gezeigten) Heizplatten können zudem so strukturiert sein, dass sie die vorstehend, in Fig. 2 gezeigten Einschnitte 5a und/oder Löcher 4 einbringen.

Es ist noch anzumerken, dass in den Figuren 7a und 7b aus Gründen der deutlicheren Darstellung die Andruckrollen und die Höhe des Falzes relativ zum Schlauchdurchmesser nicht maßstäblich gezeigt sind. In der Praxis wird der Falz ähnlich wie in den Figuren 1 und 2 für eine Naht gezeigt eine relativ zum Schlauchdurchmesser deutlich kleinere Höhe als in Figur 7b dargestellt aufweisen. Dies ist erforderlich, da der Falz bei der Extrusion überdeckt werden soll, weshalb der Fachmann die Höhe des Falzes unter Berücksichtigung der extrudierten Dicke und der Stabilität des gefalzten Materials gegenüber dem Druck der aus dem Extruder quellenden Masse geeignet vorzugsweise auf einen Bruchteil des Schlauchdurchmessers festlegt.

Obwohl dies aus Gründen der Vereinfachung hier nicht gezeigt ist, können selbstverständlich mehrere Rollenpaare parallel, beispielsweise zur Erzeugung dreier Falze jeweils drei Rollenpaare, eingesetzt werden. Auf diese Weise ist es möglich, mehrere Falze an verschiedenen Stellen zu bilden. Darüber hinaus müssen die Achsen der Andruckrollen keineswegs wie hier vereinfachend gezeigt parallel zu der Achse des Doms bzw. des Schlauchs sein. Verlaufen die Achsen der Andruckrollen schräg oder senkrecht zur Längsrichtung des Schlauchs, können beliebige Verläufe, beispielsweise quer zur Richtung des Innenschlauchs oder auch in einer Wendelform oder in sich kreuzenden Wendeln ermöglicht werden. Schließlich ist es auch möglich, die Achsen der Andruckrollenpaare gegenüber der Achse des Schlauchs während der Erzeugung der Falze hin- und her zu schwenken. Dies führt zu S-förmig verlaufenden Falzen auf dem Innenschlauch.

Fig. 8 zeigt in Seitenansicht ein Beispiel eines Innenschlauchs aus zwei Einzelstücken1d und 1e, bei dem durch Andruckrollen, deren Achsen senkrecht zur Längsrichtung des Schlauchs verlaufen, zwei derartige Falze 3d (einer in jedem Einzelstück, links und rechts in der Figur) gebildet wurden. In der Mitte wird eine Bördelstoßverbindung 3c der beiden Schlauchstücke 1d und 1e gezeigt, die analog zu den Falzungen herstellbar ist. Dazu muss unter jeder Andruckrolle eines Paars von Andruckrollen ein Ende eines zu verbindenden Schlauchs 1d, 1e liegen, so dass die Enden zweier aneinanderstoßender Schläuche durch die Andruckrollen zusammengezogen und gerafft werden können. Die weitere Vorgehensweise, d.h. da Verschweißen oder Verkleben, ist dann gleich wie bei den vorstehend erläuterten Falzen 3d. Durch eine solche Verbindung können Innenschlauchstücke insbesondere in einem Fall aneinandergeschweißt werden, in dem einerseits die Länge eines Schlauchstücks nicht ausreicht oder "endlos" produziert werden soll und andererseits eine Zugbelastung zwischen Innenschlauch und Außenschlauch wirken kann. Um die Verbindung von Innen- und Außenschlauch gegen eine derartige Zugbelastung zu sichern, sind die gezeigte Bördelstoßverbindung und die quer zur Schlauchrichtung verlaufenden Falzungen äquivalent wirksam.

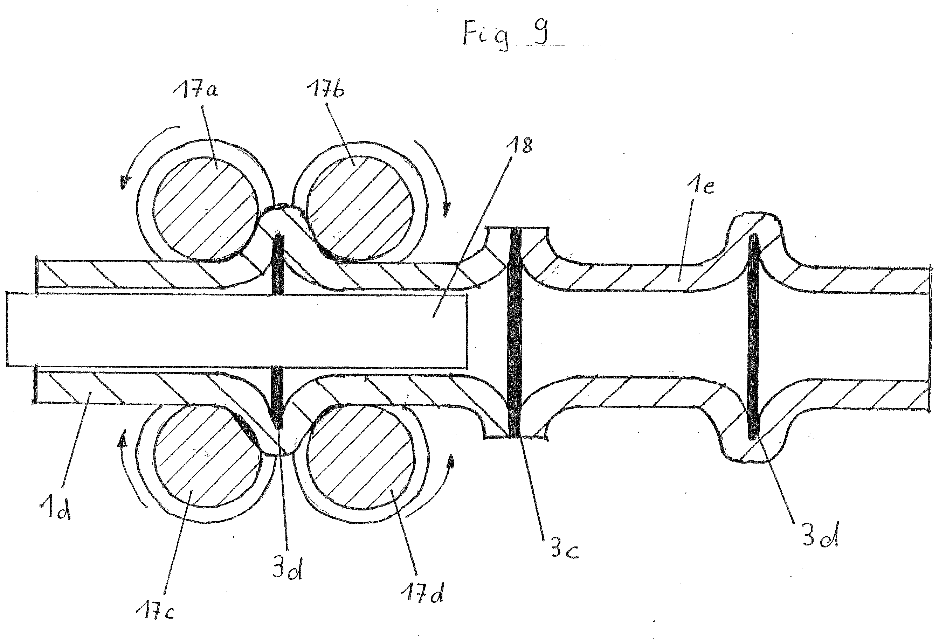

Fig. 9 verdeutlicht nochmals ein Beispiel dafür, wie die senkrecht zur Schlauchrichtung eingebrachten Falzungen in Fig. 8 hergestellt werden können. Fig. 9 veranschaulicht Kegelrollen 17a bis 17d im Schnitt, die einen Innenschlauch 1 quer zur dessen Längsrichtung auf einem Dorn 18 raffen.

Während der Fertigung wird der Innenschlauch 1 in dieser beispielhaften Skizze um eine vorgegebene Strecke von links nach rechts bewegt. Dann werden jeweils zwei Kegelrollen 17a, 17b und auf der gegenüberliegenden Seite 17c, 17d auf den Innenschlauch 1 gedrückt und gegeneinander gedreht, um den Innenschlauch zwischen sich aufzunehmen und zu falzen. Anschließend werden die Kegelrollen gegeneinander gedrückt und erhitzt, um die Falzung 3d zu verschweißen, wie bereits mit Bezug auf Fig. 7b für längs zum Innenschlauch angeordnete Kegelrollen 16 beschrieben. Wenn die Falzung 3d verschweißt ist, können die Kegelrollen 17a bis 17d nach außen geschwenkt werden, um den Innenschlauch freizugeben. Der Innenschlauch kann dann weiterbewegt werden, um eine neue Falzung zu erzeugen. Dabei ist die Länge zwischen den Falzungen prinzipiell frei wählbar und kann auch variieren.

Neben der im Beispiel der Fig. 9 aktuell von den Kegelrollen 17 gerafften Falzung 3d (auf der linken Seite in der Figur) sind in der Fig. 9 noch eine früher geraffte und verschweißte Falzung 3d (in der Figur auf der rechten Seite) sowie eine Verschweißung zweier Innenschläuche 1 d und 1 e als Bördelstoß 3c veranschaulicht. Auch die Verschweißung der Innenschläuche 1d, 1e mittels des Bördelstoßes 3c wird über die Kegelrollen 17 vorbereitet. Im Unterschied zum gezeigten Beispiel der Raffung eines einzelnen Innenschlauchs 1d fassen (in der Figur nicht gezeigt) die Rollen 17a, 17c den Schlauch 1d, während die Rollen 17b, 17d den Schlauch 1e fassen. Anschließend werden die Rollen wie beim Raffen eines Schlauchs gegeneinander gedreht, um die beiden Innenschläuche 1d, 1e aufeinander zu stoßen. Schließlich werden die Rollen 17a und 17b bzw. 17c und 17d gegeneinander gefahren und erhitzt, um so die Innenschläuche 1d, 1e über den Bördelstoß 3c miteinander zu verschweißen.

Selbstverständlich müssen sich Falzungen 3d und Innenschlauchverbindungen 3c auch nicht zwangsläufig so abwechseln, wie dies in den Fign. 8 und 9 der Einfachheit halber gezeigt wurde, sondern es können Falzungen in beliebigen Abständen voneinander eingeführt werden, ohne zwei Schläuche zu verbinden, oder die Schläuche können über die beschriebene Anordnung nur verbunden werden. Zudem kann als Verbindung der Schläuche, was in Fig. 9 nicht gezeigt ist, auch eine Stumpfstoßverschweißung gewählt werden, so dass die Verankerung ausschließlich durch die Raffungen zwischen den Schläuchen erfolgt. Diese Anordnung hat den Vorteil, dass die Verbindungsnaht 3c zweier Innenschläuche nicht als Verankerungsmittel verwendet und dadurch möglicherweise zusätzlich belastet wird.

Wieder mit Bezug auf Fig. 6 wird die Folie im vorliegenden Beispiel anschließend in einer Unterdruckkammer 13 durch den Extruder 14 geführt. Die Unterdruckkammer dient dazu, den neu gefertigten Schlauch ohne Dorn allein durch seinen Innendruck im Extruder 14 offen zu halten; dies bietet den zusätzlichen Vorteil, dass man eventuelle Löcher im Schlauch auf Grund einer Änderung der Schlauchform und/oder der Menge der zur Unterdruckerzeugung abgesaugten Luft erkennen kann.

Selbstverständlich kann bei entsprechend festem Material der Schlauch auch ohne weitere Hilfe bereits inhärent ausreichend stabil sein, oder es kann beispielsweise ein flexibler Dorn verwendet werden, wie er in der DD 214 570 B beschreiben wird, um den Schlauch im Extruder 14 aufzuspreizen. Außerdem können auch beispielsweise wie bereits beschrieben Kombinationen von magnetischen Feldern mit darauf ansprechenden Fäden oder Borsten 6, die an einer Schlauchaußenseite wie in Fig. 2 gezeigt angebracht sind und sich unter Einfluss eines Magnetfelds nach außen aufrichten, den Innenschlauch 1 im Extruder 14 aufspannen.

Im Extruder 14 wird in bekannter Weise eine Polymeraußenschicht 2 auf den Innenschlauch 1 extrudiert. Der Außendurchmesser der Außenschicht wird bevorzugt so gewählt, dass der Innenschlauch inklusive der Verankerungsmittel vollständig umhüllt ist. Das Schlauchprodukt verlässt den Extruder 6, um dann wie bereits oben beschrieben in bekannter Weise (vgl. z.B. die DE 20 2006 002 407 U1) durch eine (nicht gezeigte) Kühl- bzw. Erstarrungszone geführt und dann von einer (nicht gezeigten) Zugeinrichtung aufgenommen zu werden.

Abschließend kann das fertige mehrlagige Schlauchprodukt dann abgelängt und/oder erneut aufgewickelt werden. In der Fig. 6 wird dies nicht mehr gezeigt; stattdessen wird der Schlauch abgeschnitten gezeigt, wobei zur Verdeutlichung eine der beiden Schweißnähte 3 im fertig extrudierten mehrlagigen Schlauchprodukt hervorgehoben ist, die sich in der extrudierten Außenschicht 2 verhakt hat und somit ein Verdrehen der Außenschicht gegenüber der Schlauchfolie zuverlässig verhindert. Wie vorstehend erörtert wird die zweite Schweißnaht in dieser Figur aus Gründen der Vereinfachung nicht gezeigt.

Auf diese Weise kann das Bearbeiten der Folie, das Falten und Verschweißen derselben in einen Schlauch und das anschließende Extrudieren in einem fortlaufenden Prozess oder in getrennten Prozessen durchgeführt werden. Durch die Trennung der Prozessschritte ergibt sich die Möglichkeit, verschiedene Schritte an unterschiedlichen Orten auszuführen. Zudem ermöglicht diese Vorgehensweise eine relativ einfache Qualitätskontrolle zwischen den Schritten.

Alternativ kann die Schlauchform der Folie auch mittels eines Vakuums außerhalb der Folie in diesem Bereich gehalten werden; dies bietet den zusätzlichen Vorteil, dass man eventuelle Löcher im Schlauch auf Grund einer Änderung der Schlauchform und/oder der Menge der zur Vakuumerzeugung abgesaugten Luft erkennen kann.

Nach Verlassen der Kühlzone wird das fertig extrudierte mehrlagige Schlauchprodukt durch Förderräder oder Förderbänder mit einem an das Schlauchprodukt angepassten U-Profil gezogen, um eine gleichmäßige Extrusion zu gewährleisten.

Selbstverständlich kann das kontinuierlich extrudierte Schlauchprodukt auch abschließend in einzelne Schläuche beliebiger Länge unterteilt werden. Ist das Schlauchprodukt für medizinische Zwecke vorgesehen, kann mindestens ein Ende des mehrlagigen Schlauchprodukts mit einem Luer-Lock (DIN EN 20594-1:1993) oder einem ähnlichen Anschluss ausgestattet werden.

Alternativ zu den vorstehend vorgeschlagenen makroskopischen Behandlungen der Folienaußenseite ist es auch möglich (jedoch nicht in den Figuren dargestellt), insbesondere die Außenseite der Folie aufzurauen, anstatt die vorstehend gezeigten makroskopischen Verankerungsmittel zu verwenden. Dadurch ergeben sich im Hinblick auf die Sicherheit gegenüber Verdrehen und Verrutschen der Innen- gegenüber der Außenlage im mikroskopischen Bereich vergleichbare Effekte.

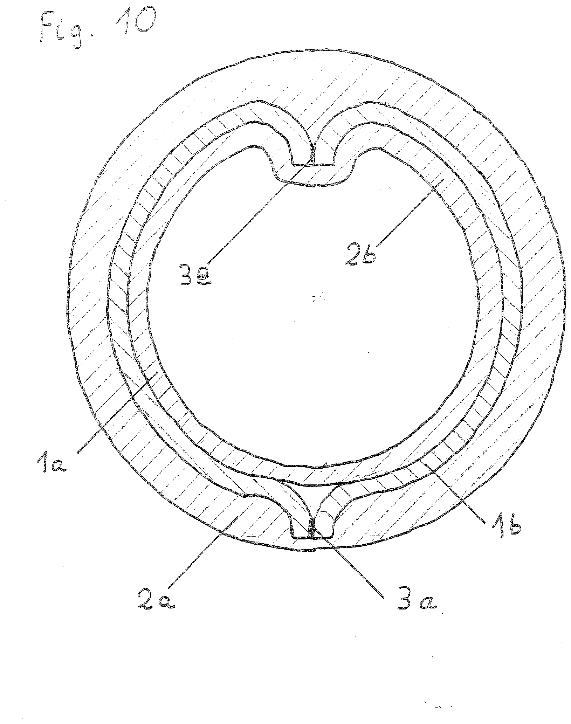

Obwohl in den bisherigen Ausführungsformen nur gezeigt wurde, dass ein Innenschlauch nach außen auftragende Nähte oder Falzungen aufweist, ist dies nicht die einzige Möglichkeit, die vorliegende Erfindung auszuführen. Fig. 10 zeigt ein nicht zur Erfindung gehörendes Beispiel, bei dem der Innenschlauch 1 aus zwei Folien besteht, die sowohl durch eine nach außen auftragende Längsnaht 3a, die wie in den vorstehend erörterten Ausführungsformen beschrieben in einem Außenschlauch 2a verankert ist, als auch durch eine nach innen auftragende Längsnaht 3e verbunden sind, die in einem noch weiter innen liegenden Schlauch 2b verankert ist. Ein solcher Aufbau kann wie folgt hergestellt werden: Zunächst wird die Naht 3e wie vorstehend erläutert durch Raffen und Verkleben bzw. Verschweißen der beiden Teilfolien 1 a und 1 b hergestellt, die den Innenschlauch bilden. Anschließend wird der Schlauch 2b eingeführt und die beiden Teilfolien 1a und 1b um diesen Schlauch 2b gelegt und an der Naht 3a miteinander verschweißt. Schließlich wird wie mit Bezug auf Fig. 6 ausführlich erläutert der Außenschlauch 2b aufextrudiert.

Wie bereits vorstehend erläutert kann auch in diesem Fall beispielsweise durch Beaufschlagen mit Druck dafür gesorgt werden, das sich der Schlauch 2b an der Innenseite der Folien 1 a, 1 b anschmiegt und die gewünschte Verankerung erzeugt wird. Wenn der Schlauch 2b beispielsweise aus einem thermoplastischen Material besteht, kann darüber hinaus durch Erwärmen des Schlauchs 2b unter Druck dafür gesorgt werden, dass er sich an die Folien 1 a, 1 b anschmiegt, und durch anschließendes Abkühlen dafür, dass die Verankerung durch das Anschmiegen beibehalten wird. Ein derartiger Aufbau hat gegenüber den bisher gezeigten Aufbauten den Vorteil, dass durch die Folien 1 a, 1 b eine (mechanische) Verankerung auch zwischen ansonsten nicht ohne weiteres miteinander verbindbaren Stoffen ermöglicht wird. Daher kann beispielsweise für den Schlauch 2b ein Material verwendet werden, das für die Durchleitung eines bestimmten Stoffes, beispielsweise eines medizinischen Produkts, geeignet ist; die Folien 1 a, 1 b können beispielsweise im Hinblick auf optimales Falzen, Lichtundurchlässigkeit und/oder hohe Reibung mit den Materialien der Schläuche 2a, 2b ausgewählt werden, während das Material des Schlauchs 2a hauptsächlich nach Kriterien wie einfache Extrudierbarkeit und mechanischer Schutz des umhüllten Materials ausgewählt wird. Dadurch kann die Materialauswahl optimiert werden.

Anstelle der in Fig. 10 gezeigten Naht 3e können auch Falze wie in den vorstehend genannten Ausführungsformen erläutert als die nach innen gerichteten Verankerungsmittel eingesetzt werden. Ebenso können Perforationen, Borsten etc. wie vorstehedn mit Bezug auf Fig. 2 erörtert auch an den nach innen vorstehenden Falzen oder Nähten angebracht werden, um die Verankerung im inneren Schlauch 2b zu fördern. Darüber hinaus ist diese Ausführungsform der Erfindung auch nicht auf lediglich eine nach innen weisende Naht bzw. einen nach innen weisenden Falz beschränkt. Im Gegenteil können sowohl mehrere nach innen als auch nach außen weisende Verankerungsmittel vorgesehen sein. Die Verankerungsmittel können in Längs-, Quer- oder in schrägen Richtungen angeordnet werden, wie dies bereits mit Bezug auf vorhergehende Ausführungsformen ausführlich erläutert wurde.

Besonders vorteilhaft kann das erfindungsgemäße Verfahren eingesetzt werden, wenn die Innenfolie aus einem Polymer besteht, das eine Sperrschicht zwischen dem Inhalt des Schlauch und dem äußeren Polymer bildet und beispielsweise bereits für medizinische Zwecke zulässig ist. In diesem Fall kann es möglich werden, dass nur stark vereinfachte Untersuchungen nötig sind, um eine Zulassung des Gesamtprodukts für medizinische Zwecke zu bekommen. Auf Grund des erfinderischen Verfahrens ist es darüber hinaus nicht notwendig, dass sich das äußere und das innere Polymer normalerweise stabil und dauerhaft chemisch/thermisch verbinden, wie dies im Stand der Technik gefordert wird. Stattdessen erfolgt die Verbindung im Wesentlichen durch mechanischen Form- und Kraftschluss. Dadurch können auch Fluoro-(co)-polymerfolien (z.B. Teflon) und Silikon sowie PVC gemeinsam mit Polyurethan, Polyamid, Polyethlen, Pebax oder anderen thermoplastischen Elastomeren verwendet werden, die sich nicht ohne Weiteres mit anderen Werkstoffen verbinden, beispielsweise verkleben, lassen. Insgesamt ermöglicht das erfindungsgemäße Verfahren damit auch neue Werkstoffkombinationen, die zu besser an den Anwendungszweck angepassten Eigenschaften des mehrlagigen Schlauchprodukts führen können.

Zusammengefasst leistet die Erfindung Folgendes:
Es wird ein mehrlagiges Schlauchprodukt gebildet, bei dem eine erste Lage aus einer Folie geformt, verschweißt oder verklebt und anschließend durch Extrusion auf der Außenseite beschichtet wird. Dabei wird darauf geachtet, dass die Folie durch Verankerungsmittel gegenüber der aufextrudierten Lage sicher gehalten wird. Die Verankerungsmittel bestehen bevorzugt aus den ohnehin benötigten Folienschweißnähten, die besonders stark auftragend, z.B. als Bördelnaht oder Umschlagnaht, ausgeführt sind, aus Falzen oder aus anderen fest mit dem Schlauchmaterial verbundenen Mitteln wie Borsten. Falls keine makroskopischen Verankerungsmittel eingesetzt werden sollen, bietet bereits ein Aufrauen der Folienaußenseite vor der Extrusion eine ähnliche Verbesserung des Zusammenhalts von Innenfolie und Außenhülle. Durch die erfindungsgemäße Ausführung wird erreicht, dass die Kombination aus Innenfolie und Außenfolie mechanische Belastungen besser aufnehmen kann.

## Patentansprüche

1. Mehrlagiges Schlauchprodukt mit einem ein- oder mehrlagigen Innenschlauch (1) und einem den Innenschlauch (1) umhüllenden ein- oder mehrlagigen Außenschlauch (2), wobei
der Innenschlauch (1) ein oder mehrere Verankerungsmittel (3, 4, 5, 6) an seiner Außenmantelfläche aufweist, die im Außenschlauch (2) formschlüssig verankert sind, wobei
das oder die Verankerungsmittel (3) eine oder mehrere, von der Außenmantelfläche des Innenschlauchs (1) vorspringende Falzungen (3d) und/oder Nähte (3a, 3b, 3c, 3e) umfasst,
**dadurch gekennzeichnet, dass** die eine oder mehreren Falzungen (3) und/oder Nähte mit Löchern (4) und/oder Fransen (5) versehen sind.

2. Schlauchprodukt nach Anspruch 1, **dadurch gekennzeichnet, dass** die eine oder mehreren Falzungen (3d) und/oder Nähte in Längsrichtung, in Umfangsrichtung oder wendelförmig um die Außenmantelfläche des Innenschlauchs (1) verlaufen.

3. Schlauchprodukt nach Anspruch 1 oder 2, **dadurch gekennzeichnet, dass** die eine oder mehreren Falzungen (3d) und/oder Nähte verschweißt oder verklebt sind.

4. Schlauchprodukt nach einem der Ansprüche 1 bis 3, **dadurch gekennzeichnet, dass** die eine oder mehreren Falzungen (3d) und/oder Nähte durch Raffen des Innenschlauchs (1) ausgebildet sind.

5. Schlauchprodukt nach einem der vorhergehenden Ansprüche, **dadurch gekennzeichnet, dass** der Innenschlauch (1) aus mehreren zu einer Schlauchform miteinander verbundenen Einzelteilen (1d, 1e) zusammengesetzt ist, und die Ränder von aneinanderstoßenden Einzelteilen (1 d, 1e) jeweils nach außen gefalzt und miteinander zu einer Naht verbunden sind.

6. Schlauchprodukt nach Anspruch 5, **dadurch gekennzeichnet, dass** der Innenschlauch (1) aus mehreren, in Umfangsrichtung aneinander gereihten Längslagen (1 a, 1 b, 1 c) gebildet ist.

7. Schlauchprodukt nach Anspruch 5, **dadurch gekennzeichnet, dass** der Innenschlauch (1) aus mehreren, in Längsrichtung aneinander gereihten Ringlagen (1 d, 1e) gebildet ist.

8. Schlauchprodukt nach einem der vorhergehenden Ansprüche, **dadurch gekennzeichnet, dass** die Außenmantelfläche des Innenschlauchs (1) aufgeraut ist, und der Außenschlauch (2) über die Aufrauung mit dem Innenschlauch (1) formschlüssig verbunden ist.

9. Schlauchprodukt nach einem der vorhergehenden Ansprüche, **dadurch gekennzeichnet, dass** das oder die Verankerungsmittel (4, 5, 6) an der Außenmantetfläche des Innenschlauchs (1) angeordnete vorspringende Borsten (6) umfassen.

10. Schlauchprodukt nach einem der vorhergehenden Ansprüche, **dadurch gekennzeichnet, dass** der Innenschlauch (1) aus einem für Medizinalschläuche zugelassenen Polymer besteht.

11. Schlauchprodukt nach einem der vorhergehenden Ansprüche, **dadurch gekennzeichnet, dass** der Innenschlauch (1) und der Außenschlauch (2) aus unterschiedlichen Materialien gefertigt sind.

12. Schlauchprodukt nach einem der vorhergehenden Ansprüche, **dadurch gekennzeichnet, dass** der Innenschlauch (1) und der Außenschlauch (2) aus einem Fluoro-(co-)polymer-, Silikon- oder PVC-Material, aus Polyurethan, Polyamid, Polyethylen, Pebax oder einem anderen thermoplastischen Elastomer gefertigt sind.

13. Schlauchprodukt nach einem der vorhergehenden Ansprüche, **dadurch gekennzeichnet, dass** der Innenschlauch (1) nach innen vorspringende Falze oder Nähte (3e) aufweist, wobei die nach innen vorspringenden Falze oder Nähte in einem weiteren Schlauch (2b) verankert sind.

14. Verfahren zur Herstellung eines mehrlagigen Schlauchprodukts nach einem der vorhergehenden Ansprüche, **dadurch gekennzeichnet, dass** zur Ausbildung eines Innenschlauchs (1) eine oder mehrere Folienlagen (1a bis 1 e) in der Weise zu einer Schlauchform angeordnet werden, dass ein oder mehrere Verankerungsmittel (3, 4, 5, 6) an der Außenmantelfläche des Innenschlauchs (1) gebildet werden, die im Außenschlauch (2) formschlüssig verankert sind.

15. Verfahren nach Anspruch 14, **dadurch gekennzeichnet, dass** zur Ausbildung der Verankerungsmittel (3, 4, 5, 6) aneinanderstoßende Ränder der einen oder mehreren Folienlagen (1a bis 1e) nach außen gefalzt werden, die dadurch gebildeten Falzungen (3, 3d) durch Kleben oder Schweißen verbunden werden, und um den dadurch erhaltenen gefalzten Innenschlauch (1) herum ein Außenschlauch (2) aus Polymer aufextrudiert wird.

16. Verfahren nach Anspruch 15, **dadurch gekennzeichnet, dass** die eine oder mehrere Folienlagen (1) zum Erhalt der Schlauchform und zur Ausbildung der Falzungen (3) um einen rotationssymmetrischen Stützkörper (15) herum angeordnet werden, und der gefalzte Innenschlauch (1) entlang des Stützkörpers (15) durch ein Extrusionswerkzeug (14) geführt wird.

17. Verfahren zur Herstellung eines mehrlagigen Schlauchprodukts nach einem der Ansprüche 1 bis 13, **dadurch gekennzeichnet, dass** ein einstückig ausgebildeter Innenschlauch (1) in der Weise in Längsrichtung und/oder Umfangsrichtung gerafft wird, dass nach außen ragende Falzungen (3, 3c, 3d) entstehen, die Falzungen (3, 3c, 3d) durch Kleben oder Schweißen verbunden werden, und um den dadurch erhaltenen gefalzten Innenschlauch (1) herum ein Außenschlauch (2) aus Polymer aufextrudiert wird.

18. Verfahren nach Anspruch 17, **dadurch gekennzeichnet, dass** der Innenschlauch (1) zur Ausbildung der Falzungen (3, 3c, 3d) um einen rotationssymmetrischen Stützkörper (15) herum angeordnet wird, und der gefalzte Innenschlauch (1) entlang des Stützkörpers (15) durch ein Extrusionswerkzeug (14) geführt wird.

19. Verfahren nach Anspruch 17, **dadurch gekennzeichnet, dass** der Innenschlauch (1) zur Ausbildung der Falzungen (3, 3c, 3d) und während des Aufextrudierens des Außenschlauchs (2) durch Erzeugen eines Druckgefälles zwischen Innenseite und Außenseite des Innenschlauchs (1) in der Schlauchform gehalten wird.

20. Verfahren nach einem der Ansprüche 14 bis 19, **dadurch gekennzeichnet, dass** an der Außenmantelfäche des gefalzten Innenschlauchs (1) vor dem Aufextrudieren des Außenschlauchs (2) borstenartige Vorsprünge (6) angeordnet werden.

21. Verfahren nach einem der Ansprüche 14 bis 20, **dadurch gekennzeichnet, dass** der gefalzte Innenschlauch (1) vor dem Aufextrudieren des Außenschlauchs (2) auf seiner Außenmantelfläche aufgerauht wird.

22. Verfahren nach Anspruch 15, **dadurch gekennzeichnet, dass** das Schlauchprodukt nach dem Aufextrudieren des Außenschlauchs (2) in festgelegten Stücklängen abgelängt wird.

23. Verfahren nach Anspruch 22, **dadurch gekennzeichnet, dass** zumindest an dem jeweils führenden Ende ein vorgegebener Anschluß befestigt wird.

24. Verfahren nach Anspruch 15, wobei der Innenschlauch (1) vor dem Aufextrudieren des Außenschlauchs (2) zur Zwischenlagerung auf einem Spulenkörper (10) aufgewickelt wird.

25. Verfahren nach Anspruch 24, wobei der Innenschlauch (1) so auf den Spulenkörper (10) aufgewickelt wird, dass jeweils zwei präparierte Seiten und zwei nicht bearbeitete Seiten aufeinanderliegen.

## Claims

1. Multilayer tubing product including a single- or multilayer inner tube (1) and a single- or multilayer outer tube (2) enclosing the inner tube (1), wherein
the inner tube (1) has one or plural reinforcement means (3, 4, 5, 6) on its outer surface that are positively embedded in the outer tube (2),
said one or plural reinforcement means (3) including one or a plurality of folds (3d) and/or seams (3a, 3b, 3c, 3e) projecting from the outer surface of the inner tube (1),
**characterized in that** the one or plural folds (3) and/or seams are provided with holes (4) and/or fringes (5).

2. Tubing product according to claim 1, **characterized in that** the one or plural folds (3d) and/or seams run in a longitudinal direction, in a circumferential direction, or helically around the surface of the inner tube (1).

3. Tubing product according to claim 1 or 2, **characterized in that** the one or plural folds (3d) and/or seams are welded or bonded.

4. Tubing product according to any of claims 1 to 3, **characterized in that** the one or plural folds (3d) and/or seams are formed by gathering the inner tube (1).

5. Tubing product according to any of the preceding claims, **characterized in that** the inner tube (1) is composed of a plurality of individual pieces (1d, 1 e) joined to each other to form a tube, and edges of the abutting individual pieces (1d, 1e) each are folded outwardly and joined to each other to form a seam.

6. Tubing product according to claim 5, **characterized in that** the inner tube (1) is formed of a plurality of longitudinal layers (1 a, 1 b, 1 c) juxtaposed in a circumferential direction.

7. Tubing product according to claim 5, **characterized in that** the inner tube (1) is formed of a plurality of ring layers (1d, 1 e) juxtaposed in a longitudinal direction.

8. Tubing product according to any of the preceding claims, **characterized in that** the outer surface of the inner tube (1) is roughened, and the outer tube (2) is positively joined to the inner tube through the roughened surface.

9. Tubing product according to any of the preceding claims, **characterized in that** the one or plural reinforcement means (4, 5, 6) include projecting bristles (6) on the outer surface of the inner tube (1).

10. Tubing product according to any of the preceding claims, **characterized in that** the inner tube (1) is made of a polymer approved for medicinal tubes.

11. Tubing product according to any of the preceding claims, **characterized in that** the inner tube (1) and the outer tube (2) are made of different materials.

12. Tubing product according to any of the preceding claims, **characterized in that** the inner tube (1) and the outer tube (2) are made of a fluoro-copolymer, silicone or PVC material, polyurethane, polyamide, polyethylene, Pebax or another thermoplastic elastomer.

13. Tubing product according to any of the preceding claims, **characterized in that** the inner tube (1) includes inwardly projecting folds or seams (3e), the inwardly projecting folds or seams being embedded in a further tube (2b).

14. Method of manufacturing a multilayer tubing product according to any of the preceding claims, **characterized in that** for forming the inner tube (1) one or plural film layer(s) (1 a to 1 e) are arranged to form a tube such that one or plural reinforcement means (3, 4, 5, 6) that are positively embedded in the outer tube (2), are formed on the outer surface of the inner tube (1).

15. The method of claim 14, **characterized in that** for forming the reinforcement means (3, 4, 5, 6) abutting edges of the one or plural foil layers (1 a to 1 e) are folded outwardly, the folds (3, 3d) thus formed are joined by bonding or welding, and around the folded inner tube (1) thus obtained an outer tube (2) made of polymer is extruded.

16. The method of claim 15, **characterized in that** the one or plural foil layers (1) are arranged around a rotation-symmetrical supporting body (15) for maintaining the tubular form and for forming the folds (3), and the folded inner tube (1) is guided along the supporting body (15) by an extrusion die (14).

17. Method of manufacturing a multilayer tubing product according to any of claims 1 to 13, **characterized in that** an integrally formed inner tube (1) is gathered in a longitudinal direction and/or circumferential direction such that outwardly projecting folds (3, 3c, 3d) are formed, the folds (3, 3c, 3d) are joined by bonding or welding, and that around the folded inner tube (1) thus obtained an outer tube (2) made of polymer is extruded.

18. The method of according to claim 17, **characterized in that** the inner tube (1), for forming the folds (3, 3c, 3d), is arranged around a rotation-symmetrical supporting body (15) and the folded inner tube (1) is guided along the supporting body (15) by an extrusion die (14).

19. The method according to claim 17, **characterized in that** the inner tube (1), for forming the folds (3, 3c, 3d) and during extrusion of the outer tube (2), is maintained in a tubular form by generating a pressure difference between an inner side and an outer side of the inner tube (1).

20. The method according to any of claims 14 to 19, **characterized in that** prior to extruding the outer tube (2), bristle-like projections (6) are arranged on the outer surface of the folded inner tube (1).

21. The method according to any of claims 14 to 20, **characterized in that** the outer surface of the folded inner tube (1) is roughened prior to extruding the outer tube (2).

22. The method according to claim 15, **characterized in that** the tubing product is cut to specified lengths after extruding the outer tube (2).

23. The method according to claim 22, **characterized in that** at least on the respectively guiding end portion a predefined connection is fixed.

24. The method according to claim 15, wherein the inner tube (1), prior to extruding the outer tube (2), is wound onto a coil body (10) for intermediate storage.

25. The method according to claim 24, wherein the inner tube (1) is wound onto the coil body (10) such that two prepared sides and two non-prepared sides each lie on top of each other.

## Revendications

1. Produit de tuyau flexible multicouche avec un tuyau flexible intérieur (1) mono- ou multicouche et un tuyau flexible extérieur (2) mono- ou multicouche enveloppant le tuyau flexible intérieur (1), dans lequel
le tuyau flexible intérieur (1) présente, au niveau de sa surface enveloppante extérieure, un ou plusieurs moyens d'ancrage (3, 4, 5, 6), qui sont ancrés par complémentarité de forme dans le tuyau flexible extérieur (2), dans lequel
le ou les moyens d'ancrage (3) comprennent une ou plusieurs pliures (3d) et/ou un ou plusieurs joints (3a, 3b, 3c, 3e) faisant saillie de la surface enveloppante extérieure du tuyau flexible intérieur (1),
**caractérisé en ce que** les une ou plusieurs pliures (3) et/ou les un ou plusieurs joints sont pourvus de trous (4) et/ou de franges (5).

2. Produit de tuyau flexible selon la revendication 1, **caractérisé en ce que** les une ou plusieurs pliures (3d) et/ou les un ou plusieurs joints s'étendent dans la direction longitudinale, dans la direction périphérique ou de manière à présenter une forme hélicoïdale autour de la surface enveloppante extérieure du tuyau flexible intérieur (1).

3. Produit de tuyau flexible selon la revendication 1 ou 2, **caractérisé en ce que** les une ou plusieurs pliures (3d) et/ou les un ou plusieurs joints sont soudés ou collés.

4. Produit de tuyau flexible selon l'une quelconque des revendications 1 à 3, **caractérisé en ce que** les une ou plusieurs pliures (3d) et/ou les un ou plusieurs joints sont réalisés en serrant le tuyau flexible intérieur (1).

5. Produit de tuyau flexible selon l'une quelconque des revendications précédentes, **caractérisé en ce que** le tuyau flexible intérieur (1) est composé de plusieurs pièces individuelles (1d, 1e) reliées les unes aux autres en une forme de tuyau flexible, et les bords de pièces individuelles (1d, 1e) contiguës sont pliés respectivement vers l'extérieur et sont reliés les uns aux autres en un joint.

6. Produit de tuyau flexible selon la revendication 5, **caractérisé en ce que** le tuyau flexible intérieur (1) est formé à partir de plusieurs couches longitudinales (1a, 1b, 1c) alignées les unes les autres dans la direction périphérique.

7. Produit de tuyau flexible selon la revendication 5, **caractérisé en ce que** le tuyau flexible intérieur (1) est formé à partir de plusieurs couches annulaires (1d, 1e) alignées les unes les autres dans la direction longitudinale.

8. Produit de tuyau flexible selon l'une quelconque des revendications précédentes, **caractérisé en ce que** la surface enveloppante extérieure du tuyau flexible intérieur (1) est rendue rugueuse, et le tuyau flexible extérieur (2) est relié par complémentarité de forme au tuyau flexible intérieur (1) par l'intermédiaire de la zone rugueuse.

9. Produit de tuyau flexible selon l'une quelconque des revendications précédentes, **caractérisé en ce que** le ou les moyens d'ancrage (4, 5, 6) comprennent des brosses (6) faisant saillie disposées au niveau de la surface enveloppante extérieure du tuyau flexible intérieur (1).

10. Produit de tuyau flexible selon l'une quelconque des revendications précédentes, **caractérisé en ce que** le tuyau flexible intérieur (1) est constitué d'un polymère toléré pour des tuyaux flexibles à usage médical.

11. Produit de tuyau flexible selon l'une quelconque des revendications précédentes, **caractérisé en ce que** le tuyau flexible intérieur (1) et le tuyau flexible extérieur (2) sont confectionnés à partir de matériaux différents.

12. Produit de tuyau flexible selon l'une quelconque des revendications précédentes, **caractérisé en ce que** le tuyau flexible intérieur (1) et le tuyau flexible extérieur (2) sont confectionnés à partir d'un matériau à base de (co)polymère fluoré, de silicone ou de PVC, à partir de polyuréthane, de polyamide, de polyéthylène, de Pebax ou d'un autre élastomère thermoplastique.

13. Produit de tuyau flexible selon l'une quelconque des revendications précédentes, **caractérisé en ce que** le tuyau flexible intérieur (1) présente des plis ou des joints (3e) faisant saillie vers l'intérieur, dans lequel les plis ou joints faisant saillie vers l'intérieur sont ancrés sans un autre tuyau flexible (2b).

14. Procédé servant à fabriquer un produit de tuyau flexible multicouche selon l'une quelconque des revendications précédentes, **caractérisé en ce qu'**une ou plusieurs couches de film (1a à 1e) sont disposées en une forme de tuyau flexible afin de réaliser un tuyau flexible intérieur (1) selon une manière telle qu'un ou plusieurs moyens d'ancrage (3, 4, 5, 6) sont formés au niveau de la surface enveloppante extérieure du tuyau flexible intérieur (1), lesquels sont ancrés par complémentarité de forme dans le tuyau flexible extérieur (2).

15. Procédé selon la revendication 14, **caractérisé en ce que** des bords contigus des une ou plusieurs couches de film (1a à 1e) sont pliés vers l'extérieur afin de réaliser les moyens d'ancrage (3, 4, 5, 6), les pliures (3, 3d) ainsi formées sont reliées par collage ou soudage, et un tuyau flexible extérieur (2) est appliqué par extrusion à partir de polymère tout autour du tuyau flexible intérieur (1) plié ainsi obtenu.

16. Procédé selon la revendication 15, **caractérisé en ce que** les une ou plusieurs couches de film (1) sont disposées tout autour d'un corps d'appui (15) symétrique en rotation afin d'obtenir la forme de tuyau flexible et afin de réaliser les pliures (3), et le tuyau flexible intérieur (1) plié est guidé le long du corps d'appui (15) à travers un outil d'extrusion (14).

17. Procédé servant à fabriquer un produit de tuyau flexible multicouche selon l'une quelconque des revendications 1 à 13, **caractérisé en ce qu'**un tuyau flexible intérieur (1) réalisé d'un seul tenant est serré dans la direction longitudinale et/ou dans la direction périphérique en une manière telle que des pliures (3, 3c, 3d) dépassant vers l'extérieur apparaissent, les pliures (3, 3c, 3d) sont reliées par collage ou soudage, et un tuyau flexible extérieur (2) est appliqué par extrusion à partir de polymère tout autour du tuyau flexible intérieur (1) plié ainsi obtenu.

18. Procédé selon la revendication 17, **caractérisé en ce que** le tuyau flexible intérieur (1) est disposé tout autour d'un corps d'appui (15) symétrique en rotation afin de réaliser les pliures (3, 3c, 3d), et le tuyau flexible intérieur (1) plié est guidé le plus du corps d'appui (15) à travers un outil d'extrusion (14).

19. Procédé selon la revendication 17, **caractérisé en ce que** le tuyau flexible intérieur (1) est maintenu par la production d'une baisse de pression dans la forme de tuyau flexible entre le côté intérieur et le côté extérieur du tuyau flexible intérieur (1) afin de réaliser les pliures (3, 3c, 3d) et au cours de l'application par extrusion du tuyau flexible extérieur (2).

20. Procédé selon l'une quelconque des revendications 14 à 19, **caractérisé en ce que** des parties faisant saillie (6) de type brosse sont disposées au niveau de la surface enveloppante extérieure du tuyau flexible intérieur (1) plié avant l'application par extrusion du tuyau flexible extérieur (2).

21. Procédé selon l'une quelconque des revendications 14 à 20, **caractérisé en ce que** le tuyau flexible intérieur (1) plié est rendu rugueux sur sa surface enveloppante extérieure avant l'application par extrusion du tuyau flexible extérieur (2).

22. Procédé selon la revendication 15, **caractérisé en ce que** le produit de tuyau flexible est découpé à la bonne longueur en des longueurs fixées après l'application par extrusion du tuyau flexible extérieur (2).

23. Procédé selon la revendication 22, **caractérisé en ce qu'**un raccord prédéfini est fixé au moins au niveau de l'extrémité respective de guidage.

24. Procédé selon la revendication 15, dans lequel le tuyau flexible intérieur (1) est enroulé sur un corps de bobine (10) avant l'application par extrusion du tuyau flexible extérieur (2) aux fins de l'entreposage temporaire.

25. Procédé selon la revendication 24, dans lequel le tuyau flexible intérieur (1) est enroulé sur le corps de bobine (10) de sorte que respectivement deux côtés préparés et deux côtés non usinés soient superposés.
